# EUROPÄISCHE PATENTSCHRIFT

(11) **EP 1 194 456 B1**
(45) Veröffentlichungstag und Bekanntmachung des Hinweises auf die Patenterteilung: **03.09.2003**
(21) Anmeldenummer: 00945735.9
(22) Anmeldetag: 09.06.2000
(51) Int. Cl.: C08F 8/00, C10L 1/14

(54) **HYDROXYLGRUPPENHALTIGE COPOLYMERE UND IHRE VERWENDUNG ZUR HERSTELLUNG VON BRENNSTOFFÖLEN MIT VERBESSERTER SCHMIERWIRKUNG**
HYDROXYL GROUP-CONTAINING COPOLYMERS AND THEIR USE FOR PRODUCING FUEL OILS WITH IMPROVED LUBRICITY
COPOLYMERES COMPORTANT DES GROUPES HYDROXYL ET LEUR UTILISATION POUR LA PREPARATION D'HUILES COMBUSTIBLES A POUVOIR LUBRIFIANT AMELIORE

(30) Priorität: 17.06.1999 DE 19927560
(43) Veröffentlichungstag der Anmeldung: 10.04.2002
(73) Patentinhaber: Clariant GmbH, 65929 Frankfurt am Main (DE)
(72) Erfinder: KRULL, Matthias, D-46147 Oberhausen (DE); NAGEL, Waltraud, D-46147 Oberhausen (DE)
(86) Internationale Anmeldenummer: EP0005355
(87) Internationale Veröffentlichungsnummer: WO00078824

(56) Entgegenhaltungen:
- EP-A- 0 112 195
- EP-A- 0 831 104
- EP-A- 0 889 113
- DE-A- 2 519 809
- DE-A- 4 330 971
- FR-A- 2 528 435

## Beschreibung

Die vorliegende Erfindung betrifft amphiphile Copolymere, herstellbar durch Umsetzung von Copolymerisaten aus olefinisch ungesättigten Carbonsäurederivaten und olefinisch ungesättigten lipophilen Monomeren mit hydroxyfunktionellen Verbindungen, ihre Verwendung zur Verbesserung der Schmierwirkung von Mitteldestillaten, sowie derart additivierte Mitteldestillat-Brennstofföle.

Mineralöle und Mineralöldestillate, die als Brennstofföle verwendet werden, enthalten im allgemeinen 0,5 Gew.-% und mehr Schwefel, der bei der Verbrennung die Bildung von Schwefeldioxid verursacht. Um die daraus resultierenden Umweltbelastungen zu vermindern, wird der Schwefelgehalt von Brennstoffölen immer weiter abgesenkt. Die Dieseltreibstoffe betreffende Norm EN 590 schreibt in Deutschland zur Zeit einen maximalen Schwefelgehalt von 500 ppm vor. In Skandinavien kommen bereits Brennstofföle mit weniger als 200 ppm und in Ausnahmefällen mit weniger als 50 ppm Schwefel zur Anwendung. Diese Brennstofföle werden in der Regel dadurch hergestellt, daß man die aus dem Erdöl durch Destillation erhaltenen Fraktionen hydrierend raffiniert. Bei der Entschwefelung werden aber auch andere Substanzen entfernt, die den Brennstoffölen eine natürliche Schmierwirkung verleihen. Zu diesen Substanzen zählen unter anderem polyaromatische und polare Verbindungen.

Es hat sich nun aber gezeigt, daß die reibungs- und verschleißmindernden Eigenschaften von Brennstoffölen mit zunehmendem Entschwefelungsgrad schlechter werden. Oftmals sind diese Eigenschaften so mangelhaft, dass an den vom Kraftstoff geschmierten Materialien wie z.B. den Verteiler-Einspritzpumpen von Dieselmotoren schon nach kurzer Zeit mit Fraßerscheinungen gerechnet werden muß. Die mittlerweile in Skandinavien vorgenommene weitere Absenkung des 95 %-Destillationspunkts auf unter 370°C, teilweise auf unter 350°C oder unter 330°C verschärft diese Problematik weiter.

Im Stand der Technik sind daher Ansätze beschrieben, die eine Lösung dieses Problems darstellen sollen (sogenannte Lubricity-Additive).

EP-A-0 680 506 offenbart Ester aus Carbonsäuren mit 2 bis 50 Kohlenstoffatomen als Additive zur Verbesserung der Schmierwirkung von schwefelarmen Mitteldestillaten mit unter 0,5 Gew.-% S.

EP-A-0 764 198 offenbart Additive, die die Schmierwirkung von Brennstoffölen verbessern, und die polare Stickstoffverbindungen auf Basis von Alkylaminen oder Alkylammoniumsalzen mit Alkylresten von 8 bis 40 Kohlenstoffatomen enthalten.

DE-A-15 94 417 offenbart Zusätze zur Verbesserung der Schmierwirkung oleophiler Flüssigkeiten, die Ester aus Glykolen und Dicarbonsäuren mit mindestens 11 Kohlenstoffatomen enthalten.

EP-A-0 635 558 offenbart Dieselöle mit Schwefelgehalten unter 0,2 Gew.-% und Aromatengehalten unter 30 Gew.-%. Diese Dieselöle werden mit 100 bis 10.000 ppm C₁-C₅-Alkylestern von ungesättigten geradkettigen C₁₂-C₂₂-Fettsäuren, die von Ölsaaten abstammen, additiviert.

EP-A-0 074 208 offenbart Mittel- und Schwerdestillate, die mit Copolymeren aus Ethylen und oxalkylierten Acrylaten oder aus Ethylen und Vinylestem gesättigter und ungesättigter Carbonsäuren additiviert sind.

EP-A-0 856 533 offenbart Copolymere auf Basis von Vinylestem von Carbonsäuren, vinylaromatischen Kohlenwasserstoffen, hydroxyfunktionellen ungesättigten Monomeren und weiteren polymerisierbaren Monomeren. Die Polymere weisen OH-Zahlen von 110-170 mg KOH/g auf, und haben Molekulargewichte von 1500 - 8000 g/mol. Die Polymere werden jedoch gemäß Offenbarung des Dokuments für die Herstellung von Überzugsmitteln für Lacke verwendet. Eine Verwendung im Zusammenhang mit Brennstoffölen wird nicht offenbart.

US-3 915 668 offenbart Terpolymere aus Ethylen, 10 - 25 Gew.-% C₁-C₈-Alkylvinylestem und 10 - 30 Gew.-% Dialkylvinylcarbinol und ihre Verwendung zur Verbesserung der Kaltfließeigenschaften von Roh- und Rückstandsölen. Die Eignung solcher Terpolymere für die Verbesserung der Schmierwirkung von Destillatkraftstoffen wird nicht offenbart.

US-3 520 852 offenbart Hydroxyimide und ein Verfahren zu ihrer Herstellung, indem Styrol-Maleinsäureanhydrid-Copolymere zunächst mit Alkoholen mit 1-5 C-Atomen verestert werden, so daß Halbester entstehen. Die Halbester werden sodann mit Hydroxyaminen unter Imidierungsbedingungen zu Imiden umgesetzt. Die erhaltenen Produkte eignen sich als Beschichtungen und Gußmassen, nicht jedoch zur Additivierung von Brennstoffölen.

US-5 064 921 offenbart hydroxyfunktionelle Polyacrylate, die mit Aminoalkoholen imidiert wurden. Sie werden als Verdicker zusammen mit Polyisocyanaten in Polyurethanen verwendet.

Aufgabe der vorliegenden Erfindung war es, Additive zu finden, die in weitgehend von Schwefel und aromatischen Verbindungen befreiten Mitteldestillaten zu einer Verbesserung der Schmierwirkung führen. Gleichzeitig sollen diese Additive auch die Kaltfließeigenschaften dieser Mitteldestillate günstig beeinflussen.

Überraschenderweise wurde gefunden, dass neuartige Copolymere, herstellbar durch Umsetzung von Copolymeren aus ethylenisch ungesättigten Carbonsäuren oder deren Derivaten und ethylenisch ungesättigten Verbindungen mit Kohlenwasserstoffgruppen von mindestens 6 C-Atomen, mit OH-Gruppen tragenden Reagentien den mit ihnen additivierten Brennstoffölen die geforderten Eigenschaften verleihen.

Gegenstand der Erfindung sind somit öllösliche Copolymere mit einer OH-Zahl von 10 bis 350 und einem Molekulargewicht von 500 bis 100.000 g/mol, erhalten aus der Umsetzung einer Copolymer-Vorstufe, welche Struktureinheiten aus
A) 5 bis 95 mol-% einer olefinisch ungesättigten Carbonsäure oder einem Derivat einer solchen Carbonsäure,
B) 5 bis 95 mol-% einer olefinisch ungesättigten Verbindung mit wenigstens einem Kohlenwasserstoffrest, der 6 oder mehr Kohlenstoffatome enthält, und gegebenenfalls
C) 0 bis 40 mol-% weiterer Struktureinheiten ausgewählt aus der Gruppe bestehend aus C₁-C₆-Alkyl(Meth)-Acrylaten, C₁-C₆-Alkyl-Vinylestern und C₂-C₆-Olefinen
umfaßt, mit einem Reagenz, das mindestens eine OH-Gruppe tragen muß, und außer dieser OH-Gruppe wenigstens eine weitere funktionelle Gruppe aufweist, die zur Reaktion mit der Carbonsäure oder dem Derivat einer Carbonsäure gemäß Komponente A) befähigt ist, wobei die Restsäurezahl durch die Zugabe des Reagenzes auf einen Wert von unter 150 mg KOH/g Copolymer eingestellt wird.

Ein weiterer Gegenstand der Erfindung sind Mitteldestillat-Brennstofföle mit einem Schwefelgehalt von unter 0,5 Gew.-%, welche neben einem größeren Anteil eines Brennstofföls einen kleineren Anteil Copolymere der oben definierten Art enthalten.

Ein weiterer Gegenstand der Erfindung ist die Verwendung der hierin definierten Copolymere zur Verbesserung der Schmierwirkung und Kaltfließeigenschaften von Mitteldestillat-Brennstoffölen.

In einer bevorzugten Ausführungsform der Erfindung weist das Copolymer eine OH-Zahl von 20 bis 300 mg KOH/g auf. In einer weiteren bevorzugten Ausführungsform weist das Copolymer ein mittleres Molekulargewicht Mw von 700 bis 10.000 g/mol auf. In einer weiteren bevorzugten Ausführungsform liegt der Anteil der Struktureinheiten (A) zwischen 10 und 60 mol-%. In einer weiteren bevorzugten Ausführungsform beträgt die Restsäurezahl unter 20, insbesondere unter 10 mg KOH/g. Bevorzugte Copolymere weisen Schmelzviskositäten bei 140°C zwischen 10 und 5000 mPas, insbesondere zwischen 15 und 1000, speziell zwischen 20 und 500 mPas auf.

Bei den Carbonsäuren und Carbonsäurederivaten, die die Struktureinheiten A) der Copolymer-Vorstufe ausmachen, handelt es sich vorzugsweise um Maleinsäure, Acrylsäure, Methacrylsäure, Fumarsäure oder Itaconsäure, sowie deren Derivate.

Als Derivate der Carbonsäuren sind deren Anhydride bevorzugt. Besonders bevorzugt ist Maleinsäureanhydrid. Bei Copolymeren des Maleinsäureanhydrids (MSA) mit α-Olefinen sind altemierende Copolymere bevorzugt, die etwa 40 bis 60 mol-% MSA und 60-40 mol-% α-Olefin enthalten.

In einer weiteren bevorzugten Ausführungsform handelt es sich bei den Carbonsäurederivaten um Ester mit Alkoholen von 1 bis 5 Kohlenstoffatomen.

Bevorzugte Comonomere (B) sind olefinisch ungesättigte Verbindungen, die Kohlenwasserstoffreste mit mindestens 6 C-Atomen, vorzugsweise mindestens 8, insbesondere mindestens 10 C-Atomen (unter Ausschluß der zur Polymerisation erforderlichen olefinischen Gruppe) tragen. Diese Kohlenwasserstoffreste können linear, verzweigt, cyclisch und/oder aromatisch sein. Neben Kohlenwasserstoffgruppen können sie auch untergeordnete Mengen weiterer funktioneller Gruppen mit Heteroatomen, wie beispielsweise Nitro-, Halogen-, Cyano-, Aminogruppen tragen, sofern diese die Öllöslichkeit nicht beeinträchtigen. Dabei handelt es sich vorzugsweise um Monomere aus folgenden Gruppen:
B1) Vinylester von Carbonsäuren mit mindestens 6 Kohlenstoffatomen, wie z.B. Octylvinylester, 2-Ethylhexylvinylester, Laurinsäurevinylester, Octadecylvinylester, Neononansäurevinylester, Neodecansäurevinylester, Neoundecansäurevinylester, Neododecansäurevinylester.
B2) Ester ethylenisch ungesättigter Carbonsäuren mit Alkoholen mit mindestens 6 Kohlenstoffatomen, wie z.B. Octylacrylat, 2-Ethylhexylacrylat, Decylacrylat, Dodecylacrylat, Tetradecylacrylat, Hexadecylacrylat, Octadecylacrylat, Oleylacrylat, Eicosylacrylat und Mischungen wie Cocosfettalky-, Talgfettalkyl- und Behenylacrylat sowie die entsprechenden Ester der Methacrylsäure, Maleinsäure, Fumarsäure und Itaconsäure.
B3) Alkylvinylether, die mindestens einen C₆-Alkylrest tragen, wie z.B. Octadecylvinylether
B4) Olefine und Vinylaromaten mit Kettenlängen (unter Ausschluß der zur Polymerisation erforderlichen olefinischen Gruppe) von mindestens 6 Kohlenstoffatomen, wie z.B. 1-Octen, 1-Decen, 1-Dodecen, 1-Tetradecen, 1-Hexadecen, 1-Octadecen, 1-Eicosen, technische *a*-Olefinschnitte wie C₂₀-C₂₄-α-Olefin, C₂₄-C₂₈-α-Olefin und C₃₀₊-α-Olefin, Styrol, α-Methylstyrol, p-Methoxystyrol.

Besonders bevorzugte Comonomere (B) sind die oben genannten olefinisch ungesättigten Verbindungen der Gruppen B1) bis B4) mit Kohlenwasserstoffresten, die mindestens 8 C-Atome umfassen. Bevorzugt tragen mindestens 10 mol-%, bevorzugt mindestens 25 mol-%, insbesondere mehr als 50 mol-% der Monomere (B) lineare Kohlenwasserstoffreste. Vorzugsweise liegt der Anteil an Comonomeren (B) zwischen 40 und 90 mol-%.

Als weitere Comonomere C) können gegebenenfalls bis zu 40 mol-% Olefine wie Ethylen, Propen, Buten, Isobuten, Penten, Hexen oder 4-Methylpenten, einpolymerisiert werden.

Zur Erzielung einer leichteren Handhabbarkeit der Additive enthalten vorzugsweise bis zu 20 mol-%, insbesondere bis zu 10 mol-% der Comonomere B) und/oder gegebenenfalls C) verzweigte Alkylketten. Dabei sind auch Oligomere und Polymere niederer Olefine wie z.B. Poly(propylen), Poly(buten) und Poly(isobutylen) geeignet, wobei solche mit hohem Anteil an endständigen Doppelbindungen (> 50 mol-%, bevorzugt > 70 mol-%, insbesondere > 75 mol-%) bevorzugt sind.

Die K-Werte (gemessen nach Ubbelohde in toluolischer Lösung) der Copolymere liegen vorzugsweise unterhalb 100, insbesondere zwischen 5 und 50 und speziell zwischen 5 und 30. Öllöslich im Sinne der Erfindung heißt, daß mindestens 10 Gew.-%, bevorzugt mindestens 1 Gew.-%, insbesondere mindestens 0,1 Gew.-% des Additivs im zu additivierenden Mitteldestillat klar löslich wird.

Die Copolymerisation der Comonomeren erfolgt nach bekannten diskontinuierlichen oder kontinuierlichen Polymerisationsverfahren (vgl. hierzu z.B. Ullmanns Encyclopädie der Technischen Chemie, 5. Auflage, Vol. A21, Seiten 305 bis 413). Geeignet sind die Polymerisation in Lösung, in Suspension, in der Gasphase und die Fällungs- sowie Massepolymerisation. Bevorzugt sind Masseund Lösungspolymerisation. Die Reaktion der Comonomeren wird durch Radikale bildende Initiatoren (Radikalkettenstarter) eingeleitet Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)-peroxidicarbonat, t-Butylpermaleinat, t-Butylperpivalat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methylbutyronitril). Die Initiatoren werden einzeln oder als Gemisch aus zwei oder mehr Substanzen in Mengen von 0,01 bis 20 Gew.-%, vorzugsweise 0,05 bis 10 Gew.-%, bezogen auf das Comonomerengemisch, eingesetzt.

Die Polymerisation erfolgt in der Regel bei Temperaturen von 40 - 300°C, vorzugsweise bei 80 - 250°C, wobei bei Verwendung von Monomeren und/oder Lösemitteln mit Siedetemperaturen unterhalb der Polymerisationstemperatur zweckmäßig unter Druck gearbeitet wird. Die Polymerisation wird zweckmäßig unter Luftausschluß, z.B. unter Stickstoff durchgeführt, da Sauerstoff die Polymerisation stört. Bei der Wahl des Initiators bzw. des Initiatorsystems ist es zweckmäßig, darauf zu achten, daß die Halbwertzeit des Initiators bzw. Initiatorsystems bei der gewählten Polymerisationstemperatur weniger als 3 Stunden beträgt. Bevorzugt liegt sie zwischen 0,5 Minuten und einer Stunde. Das gewünschte Molekulargewicht der Copolymerisate ergibt sich bei gegebener Zusammensetzung des Comonomerengemisches durch Variation der Reaktionsparameter Konzentration und Temperatur. Zur Erzielung niedermolekularer Copolymere kann weiterhin unter Zusatz von Moderatoren gearbeitet werden. Geeignete Molekulargewichtsregler sind beispielsweise Aldehyde, Ketone, Alkohole sowie organische Schwefel-Verbindungen wie Mercaptoethanol, Mercaptopropanol, Mercaptoessigsäure, Mercaptopropionsäure, tert.-Butylmercaptan, n-Butylmercaptan, n-Octylmercaptan, tert.-Dodecylmercaptan und n-Dodecylmercaptan. In Abhängigkeit von der angestrebten Viskosität werden die Moderatoren in Mengen bis zu 20 Gew.-%, vorzugsweise 0,05 bis 10 Gew.-%, bezogen auf das Comonomerengemisch, angewandt.

Für die Polymerisation geeignete Apparaturen sind z.B. übliche Rührkessel mit beispielsweise Anker-, Blatt-, Impeller- oder Mehrstufenimpuls-Gegenstrom-Rührer und für die kontinuierliche Herstellung Rührkesselkaskaden, Rührreaktoren oder statische Mischer.

Bevorzugtes Verfahren zur Herstellung der erfindungsgemäßen Copolymeren ist neben der lösemittelfreien Massepolymerisation die Lösungspolymerisation. Sie wird durchgeführt in Lösungsmitteln, in denen die Monomeren und die gebildeten Copolymeren löslich sind. Es sind hierfür alle Lösungsmittel geeignet, die diese Vorgabe erfüllen und die mit den Monomeren sowie den gebildeten Copolymeren keine Reaktion eingehen. Beispielsweise sind dies organische, bevorzugt aromatische Lösemittel, wie Cumol, Toluol, Xylol, Ethylbenzol oder auch kommerzielle Lösemittelgemische, wie ®Solvent Naphtha, ®Shellsol AB oder ®Solvesso 150, 200.

Bei der Herstellung können alle Monomere vorgelegt und durch Zugabe eines Radikalkettenstarters und Wärmezufuhr polymerisiert werden.

Zweckmäßigerweise wird jedoch das Lösungsmittel und gegebenenfalls ein Teil der Monomeren (z.B. ca. 5 - 20 %) vorgelegt und der Rest der Monomerenmischung mit dem Initiator und gegebenenfalls Co-Initiator und Regler zudosiert.

Die Konzentration der zu polymerisierenden Monomeren liegt zwischen 20 und 95 Gew.-%, bevorzugt 50 und 90 Gew.-%.

Das feste Copolymer kann durch Ausfällung mit geeigneten Nicht-Lösemitteln, wie Aceton oder Methanol oder durch Verdampfen des Lösungsmittels isoliert werden. Es ist jedoch zweckmäßig, für die Polymerisation ein Lösungsmittel zu wählen, in dem das Polymer direkt erfindungsgemäß weiterverarbeitet werden kann.

Zur Herstellung der erfindungsgemäßen Copolymere werden die polymeren Säuregruppen mit mindestens bifunktionellen Reagentien, die zumindest eine OH-Funktion tragen, umgesetzt Die Bindung an das Polymer kann über Hydroxygruppen als Ester und/oder über primäre bzw. sekundäre Aminogruppen in Form von Amiden, Imiden und/oder Ammoniumsalzen erfolgen. Zur Vermeidung von Vemetzungsreaktionen kann z.B. mit einem Überschuß bifunktionellem Reagenz und/oder in hoher Verdünnung gearbeitet werden. Die Veresterung, Amidierung bzw. Imidierung erfolgt in der Regel unter Auskreisen von Reaktionswasser (azeotrope Destillation, Austreiben mit Gasstrom wie N₂). Dabei wird die Restsäurezahl auf Werte <150, bevorzugt <20, insbesondere <10 mg KOH/g eingestellt. Geeignete Reagentien sind z.B.: Ethylenglykol, Propylenglykol, Diethylenglykol, Triethylenglykol, Trimethylolpropan, Mischalkoxylate aus Ethylenoxid, Propylenoxid und/oder Butylenoxid mit bis zu 50, insbesondere bis zu 10 von Ethylenoxid, Propylenoxid und/oder Butylenoxid abgeleiteten Einheiten, Glycerin, Pentaerythrit, Sorbit, Ethanolamin, Diethanolamin, Triethanolamin, Butyldiethanolamin, Methyldiisopropanolamin, Aminopropandiol sowie alkoxylierte Polyamine. Letztere können beispielsweise von Etylendiamin, Hexamethylendiamin, Diethylentriamin, Triethylentetramin, Tetraethylenpentamin sowie deren höheren Homologen abgeleitet sein, die mit 0,5 bis 50, insbesondere bis 10 mol Ethylenoxid, Propylenoxid und/oder Butylenoxid pro an ein N-Atom gebundenes H-Atom alkoxyliert sind. Die Umsetzung mit dem Polymer kann sowohl über eine OH-Gruppe zum Ester wie auch über eine primäre oder sekundäre Aminogruppe zum Amid bzw. Imid erfolgen.

Erfindungsgemäß ist auch die polymeranaloge Umsetzung von Amiden bzw. Diimiden mit Epoxiden wie z.B. Ethylenoxid, Propylenoxid und Butylenoxid, wobei die entstehende OH-Gruppe frei bleibt.

Vorzugsweise erfolgt die Umsetzung der säuregruppenhaltigen Copolymere erfolgt zwischen 30 und 250°C im Verlauf von 0,5 bis 20 Stunden. Das hydroxyfunktionelle Reagenz wird dabei mit Mengen von insbesondere etwa 1 bis etwa 2 mol pro mol einpolymerisiertem Säure(derivat) umgesetzt.

Um die OH-Zahl bei gegebenem Basispolymer abzusenken bzw. die Öllöslichkeit zu verbessem können bis zu 50 mol-% des hydroxyfunktionellen Reagenzes durch Alkylamine und/oder Alkohole mit bis zu 24 C-Atomen ersetzt werden.

Die erfindungsgemäßen Copolymerisate werden Mineralölen oder Mineralöldestillaten in Form von Lösungen oder Dispersionen die 10 bis 90 Gew.-%, bevorzugt 20 - 80 Gew.-%, der Copolymerisate enthalten, zugesetzt. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ®Shellsol AB, ®Solvesso 150, ®Solvesso 200, ®Exxsol-, ®ISOPAR- und ®Shellsol D-Typen. Weiterhin können Lösemittel nativer Herkunft wie Fettsäureester als Lösemittel verwendet werden. Beispiele sind Triglyceride und Fettsäureester, wie z.B. Rapsölsäuremethylester. Durch die Copolymerisate in ihren Schmier- und/oder Kaltfließeigenschaften verbesserte Mineratöle oder Mineralöldestillate enthalten 0,001 bis 2, vorzugsweise 0,005 bis 0,5 Gew.-% Copolymerisat, bezogen auf das Destillat.

Die erfindungsgemäßen Copolymerisate können weiterhin in Form von Mischungen verwendet werden, die aus Copolymeren der beanspruchten Art, jedoch unterschiedlicher qualitativer und/oder quantitativer Zusammensetzung und/oder unterschiedlicher (bei 140°C gemessener) Viskosität bestehen. Das Mischungsverhältnis (in Gewichtsteilen) der Copolymeren kann über einen weiten Bereich variiert werden und z.B. 20:1 bis 1:20, vorzugsweise 10:1 bis 1:10 betragen. Auf diesem Wege lassen sich die Additive gezielt individuellen Anforderungen anpassen.

Zur Herstellung von Additivpaketen für spezielle Problemlösungen können die erfindungsgemäßen Copolymerisate auch zusammen mit einem oder mehreren öllöslichen Co-Additiven eingesetzt werden, die bereits für sich allein die Kaltfließeigenschaften und/oder Schmierwirkung von Rohölen, Schmierölen oder Brennölen verbessern. Beispiele solcher Co-Additive sind Vinylacetat enthaltende Copolymerisate oder Terpolymerisate des Ethylens, polare Verbindungen, die eine Paraffindispergierung bewirken (Paraffindispergatoren), Kammpolymere, Alkylphenol-Aldehydharze sowie öllösliche Amphiphile.

So haben sich Mischungen der Terpolymerisate mit Copolymerisaten hervorragend bewährt, die 10 bis 40 Gew.-% Vinylacetat und 60 bis 90 Gew.-% Ethylen enthalten. Nach einer weiteren Ausgestaltung der Erfindung setzt man die erfindungsgemäß hergestellten Terpolymerisate in Mischung mit Ethylen/Vinylacetat/ Neononansäurevinylester-Terpolymerisaten oder EthylenVinylacetat/ Neodecansäurevinylester-Terpolymerisaten zur Verbesserung der Fließfähigkeit von Mineralölen oder Mineralöldestillaten ein. Die Terpolymerisate der Neononansäurevinylester bzw. der Neodecansäurevinylester enthalten außer Ethylen 10 bis 35 Gew.-% Vinylacetat und 1 bis 25 Gew.-% der jeweiligen Neoverbindung. Weitere bevorzugte Copolymere enthalten neben Ethylen und 10 -35 Gew.-% Vinylester noch 0,5 - 20 Gew.-% Olefine wie die Diisobutylen, 4-Methylpenten oder Norbomen. Das Mischungsverhältnis der erfindungsgemäß hergestellten Terpolymerisate mit den vorstehend beschriebenen Ethylen/Vinylacetat-Copolymerisaten bzw. den Copolymerisaten aus Ethylen, Vinylacetat und den Vinylestem der Neononan- bzw. der Neodecansäure bzw. den Olefin-Terpolymerisaten beträgt (in Gewichtsteilen) 20:1 bis 1:20, vorzugsweise 10:1 bis 1:10.

Zur Verwendung als Fließverbesserer und/oder Lubricity-Additiv können die erfindungsgemäßen Copolymerisate ferner in Mischung mit Paraffindispergatoren eingesetzt werden. Diese Additive reduzieren die Größe der Paraffinkristalle und bewirken, daß die Paraffinpartikel sich nicht absetzen, sondern kolloidal mit deutlich reduziertem Sedimentationsbestreben, dispergiert bleiben. Weiterhin verstärken sie die Schmierwirkung der erfindungsgemäßen Copolymere. Als Paraffindispergatoren haben sich öllösliche polare Verbindungen mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4 211 534). Andere Paraffindispergatoren sind Copolymere des Maleinsäureanhydrids und α,β-ungesättigter Verbindungen, die gegebenenfalls mit primären Monoalkylaminen und/oder aliphatischen Alkoholen umgesetzt werden können (vgl. EP 0 154 177), die Umsetzungsprodukte von Alkenylspirobislactonen mit Aminen (vgl. EP 0 413 279 B1) und nach EP 0 606 055 A2 Umsetzungsprodukte von Terpolymeren auf Basis α,β-ungesättigter Dicarbonsäureanhydride, α,β-ungesättigter Verbindungen und Polyoxyalkylenether niederer ungesättigter Alkohole. Auch Alkylphenol-Aldehydharze sind als Paraffindispergatoren geeignet.

So können die erfindungsgemäßen Copolymere in Mischung mit Alkylphenol-Formaldehydharzen eingesetzt werden. In einer bevorzugten Ausführungsform der Erfindung handelt es sich bei diesen Alkylphenol-Formaldehydharzen um solche der Formel 5 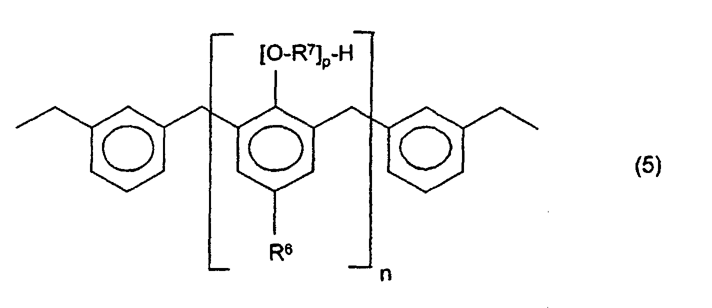 worin R⁶ für C₄-C₅₀-Alkyl oder -Alkenyl, R⁷ für Ethoxy- und/oder Propoxy, n für eine Zahl von 5 bis 100 und p für eine Zahl von 0 bis 50 steht.

Schließlich werden in einer weiteren bewährten Variante der Erfindung die erfindungsgemäßen Copolymerisate zusammen mit Kammpolymeren verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comblike Polymers-Structure and Properties; N.A. Platé and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP 0 153 176 A1), Copolymere aus einem C₆- bis C₂₄-α-Olefin und einem N-C₆- bis C₂₂-Alkylmaleinsäureimid (vgl. EP 0 320 766), femer veresterte Olefin/Maleinsäureanhydrid-Copolymere, Polymere und Copolymere von α-Olefinen und veresterte Copolymere von Styrol und Maleinsäureanhydrid.

Kammpolymere können beispielsweise durch die Formel 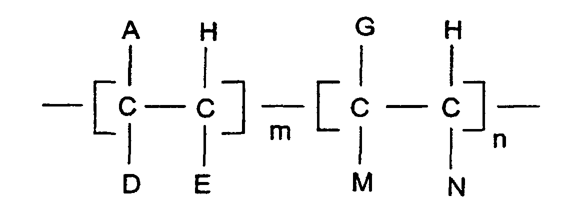 beschrieben werden. Darin bedeuten
- A: R', COOR', OCOR', R"-COOR' oder OR';
- D: H, CH₃, A oder R;
- E: H oder A;
- G: H, R", R"-COOR', einen Arylrest oder einen heterocyclischen Rest;
- M: H, COOR", OCOR", OR" oder COOH;
- N: H, R", COOR", OCOR, COOH oder einen Arylrest;
- R': eine Kohlenwasserstoffkette mit 8-150 Kohlenstoffatomen;
- R": eine Kohlenwasserstoffkette mit 1 bis 10 Kohlenstoffatomen;
- m: eine Zahl zwischen 0,4 und 1,0; und
- n: eine Zahl zwischen 0 und 0,6.

Das Mischungsverhältnis (in Gewichtsteilen) der erfindungsgemäß hergestellten Terpolymerisate mit Paraffindispergatoren, Harzen bzw. Kammpolymeren beträgt jeweils 1:10 bis 20:1, vorzugsweise 1:1 bis 10:1.

Zur Optimierung der Schmierwirkung können die erfindungsgemäßen Copolymeren in Mischung mit weiteren Lubricity-Additiven eingesetzt werden. Als Lubricity-Additive haben sich vorzugsweise Fettalkohole, Fettsäuren und Dimerfettsäuren sowie deren Ester und Partialester mit Glykolen (gemäß DE-A-15 94 417), Polyolen wie Glycerin (gemäß EP-A-0 680 506, EP-A-0 739 970) oder Hydroxyaminen (gemäß EP-A-0 802 961) bewährt.

Die erfindungsgemäßen Copolymere sind geeignet, die Schmiereigenschaften und Kälteeigenschaften von tierischen, pflanzlichen oder mineralischen Ölen zu verbessern. Sie sind für die Verwendung in Mitteldestillaten besonders gut geeignet. Als Mitteldestillate bezeichnet man insbesondere solche Mineralöle, die durch Destillation von Rohöl gewonnen werden und im Bereich von 120 bis 450°C sieden, beispielsweise Kerosin, Jet-Fuel, Diesel und Heizöl. Vorzugsweise werden die erfindungsgemäßen Copolymere in solchen Mitteldestillaten verwendet, die 0,5 Gew.-% Schwefel und weniger, besonders bevorzugt weniger als 500 ppm, insbesondere weniger als 200 ppm Schwefel und in speziellen Fällen weniger als 50 ppm Schwefel enthalten. Es handelt sich dabei im allgemeinen um solche Mitteldestillate, die einer hydrierenden Raffination unterworfen wurden, und die daher nur geringe Anteile an polyaromatischen und polaren Verbindungen enthalten, die ihnen eine natürliche Schmierwirkung verleihen. Die erfindungsgemäßen Copolymere werden weiterhin vorzugsweise in solchen Mitteldestillaten verwendet, die 95 %-Destillationspunkte unter 370°C, insbesondere 350°C und in Spezialfällen unter 330°C aufweisen. Sie können ferner als Komponente in Schmierölen eingesetzt werden.

Die Polymerisate können allein oder auch zusammen mit anderen Additiven verwendet werden, z.B. mit anderen Stockpunktemiedrigem oder Entwachsungshilfsmitteln, mit Korrosionsinhibitoren, Antioxidantien, Schlamminhibitoren, Dehazem und Zusätzen zur Erniedrigung des Cloud-Points.

Die Wirksamkeit der erfindungsgemäßen Copolymere als Lubricity-Additive wird durch die nachfolgenden Beispiele näher erläutert.

### Beispiele

### Charakterisierung der eingesetzten Additive

Die Bestimmung der hydroxyfunktionellen Comonomere erfolgt durch Bestimmung der OH-Zahl durch Umsetzung des Polymers mit überschüssigem Acetanhydrid und anschließender Titration der gebildeten Essigsäure mit KOH. Die Bestimmung des K-Werts erfolgt nach Ubbelohde bei 25°C in Toluol bei einer Polymerkonzentration von 5 Gew.-%. Alle Additive werden zur Verbesserung der Handhabbarkeit als 50 %ige Lösungen in Solvent Naphtha bzw. Kerosin eingesetzt.

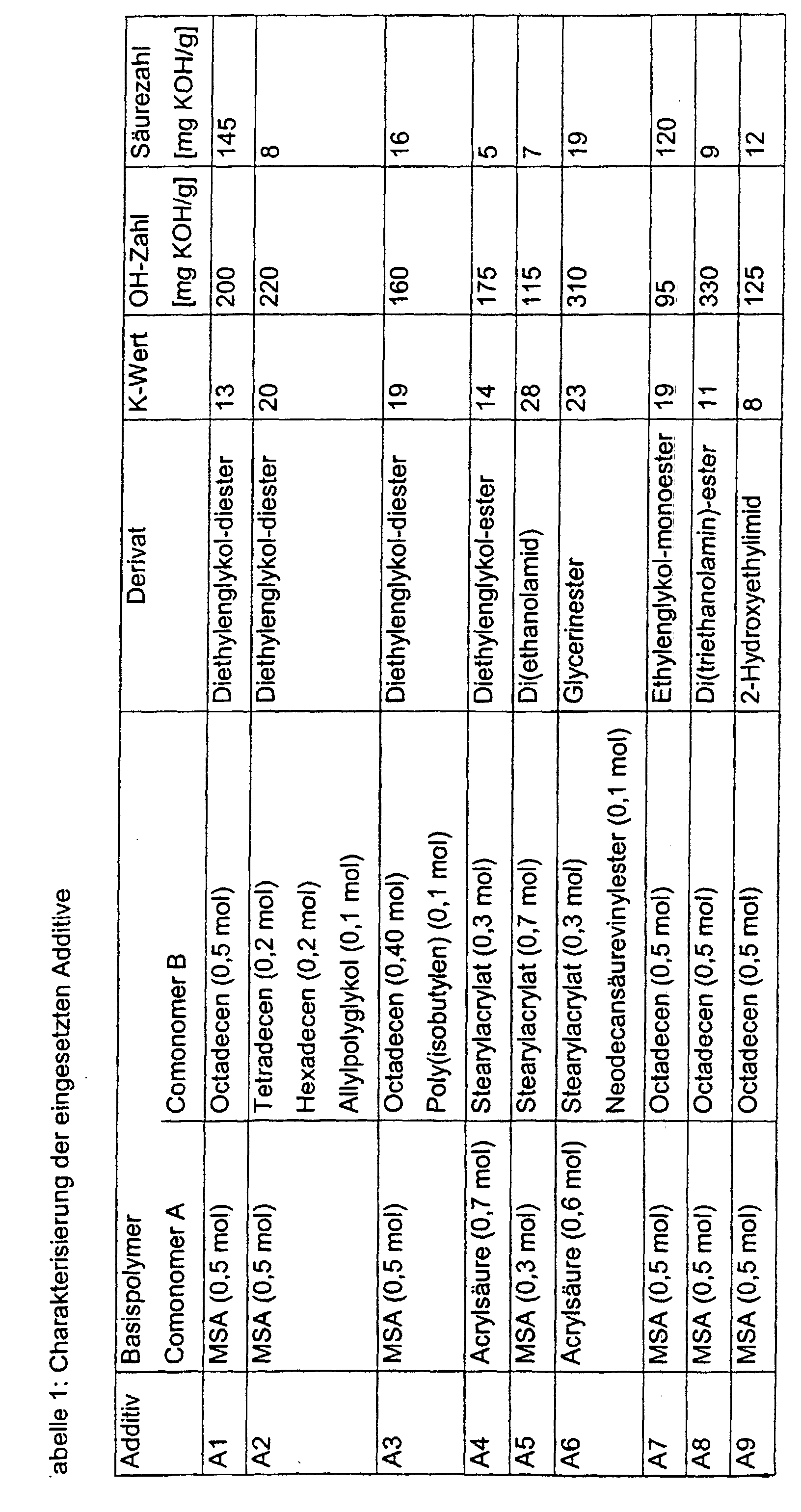

**Tabelle 3:**

| Wear Scar in Testöl 1 | | | | |
|---|---|---|---|---|
| Beispiel | Additiv | Wear Scar | Film | Friction |
| 1 | 200 ppm Additiv A1 | 319 µm | 78 % | 0,18 |
| 2 | 235 ppm Additiv A2 | 204 µm | 93 % | 0,15 |
| 3 | 250 ppm Additiv A3 | 245 µm | 92 % | 0,15 |
| 4 | 200 ppm Additiv A3 | 343 µm | 79 % | 0,19 |
| 5 | 180 ppm Additiv A4 | 236 µm | 88 % | 0,15 |
| 6 | 250 ppm Additiv A5 | 311 µm | 74 % | 0,18 |
| 7 | 260 ppm Additiv A6 | 362 µm | 80 % | 0,16 |
| 8 | 200 ppm Additiv A7 | 244 µm | 93 % | 0,15 |
| 9 | 175 ppm Additiv A8 | 324 µm | 84 % | 0,15 |

Liste der verwendeten Handelsbezeichnungen
- Solvent Naphtha ®Shellsol AB ®Solvesso 150: aromatische Lösemittelgemische mit Siedebereich 180 bis 210°C
- ®Solvesso 200: aromatisches Lösemittelgemisch mit Siedebereich 230 bis 287°C
- ®Exxsol: Dearomatisierte Lösemittel in verschiedenen Siedebereichen, beispielsweise ®Exxsol D60: 187 bis 215°C

® ISOPAR (Exxon) isoparaffinische Lösemittelgemische in verschiedenen Siedebereichen, beispielsweise ®ISOPAR L: 190 bis 210°C

®Shellsol D hauptsächlich aliphatische Lösemittelgemische in verschiedenen Siedebereichen

## Patentansprüche

1. Öllösliche Copolymere mit einer OH-Zahl von 10 bis 350 und einem Molekulargewicht von 500 bis 100.000 g/mol, erhalten aus der Umsetzung einer Copolymer-Vorstufe, welche Struktureinheiten aus
A) 5 bis 95 mol-% einer olefinisch ungesättigten Carbonsäure oder einem Derivat einer solchen Carbonsäure,
B) 5 bis 95 mol-% einer olefinisch ungesättigten Verbindung mit wenigstens einem Kohlenwasserstoffrest, der 6 oder mehr Kohlenstoffatome enthält, und gegebenenfalls
C) 0 bis 40 mol-% weiterer Struktureinheiten ausgewählt aus der Gruppe bestehend aus C₁-C₆-Alkyl(Meth)-Acrylaten, C₁-C₆-Alkyl-Vinylestern und C₂-C₆-Olefinen
umfaßt, mit einem Reagenz, das mindestens eine OH-Gruppe tragen muß, und außer dieser OH-Gruppe wenigstens eine weitere funktionelle Gruppe aufweist, die zur Reaktion mit der Carbonsäure oder dem Derivat einer Carbonsäure gemäß Komponente A) befähigt ist, wobei die Restsäurezahl durch die Zugabe des Reagenzes auf einen Wert von unter 150 mg KOH/g Copolymer eingestellt wird.

2. Copolymere nach Anspruch 1, welche eine OH-Zahl von 20 bis 300 mg KOH/g aufweisen.

3. Copolymere nach Anspruch 1 und/oder 2, welche ein mittleres Molekulargewicht Mw von 700 bis 10.000 g/mol aufweisen.

4. Copolymere nach einem oder mehreren der Ansprüche 1 bis 3, worin der Anteil der Struktureinheiten (A) zwischen 10 und 60 mol-% liegt.

5. Copolymere nach einem oder mehreren der Ansprüche 1 bis 4, worin die Restsäurezahl unter 20, insbesondere unter 10 mg KOH/g liegt.

6. Copolymere nach einem oder mehreren der Ansprüche 1 bis 5, worin die Struktureinheiten A) von Maleinsäure, Acrylsäure, Methacrylsäure, Fumarsäure oder Itaconsäure, sowie deren Derivate abgeleitet sind.

7. Copolymere nach einem oder mehreren der Ansprüche 1 bis 6, worin die Comonomere (B) olefinisch ungesättigte Verbindungen, die lineare, verzweigte, cyclische und/oder aromatische Kohlenwasserstoffreste mit mindestens 6 C-Atomen, vorzugsweise mindestens 8, insbesondere mindestens 10 C-Atomen (unter Ausschluß der zur Polymerisation erforderlichen olefinischen Gruppe) tragen, sind.

8. Copolymere nach einem oder mehreren der Ansprüche 1 bis 7, worin die Comonomere C) ausgewählt sind aus der Gruppe bestehend aus Ethylen, Propen, Buten, Isobuten, Penten, Hexen oder 4-Methylpenten.

9. Copolymere nach einem oder mehreren der Ansprüche 1 bis 8, die Schmelzviskositäten bei 140°C zwischen 10 und 5000 mPas aufweisen.

10. Brennstoffölzusammensetzung, enthaltend eine größere Menge eines Mitteldestillat-Brennstofföls mit einem Schwefelgehalt unter 0,5 Gew.-% und eine kleinere Menge eines Copolymers gemäß Anspruch 1 bis 9.

11. Verwendung eines Copolymers gemäß Anspruch 1 bis 9 zur Verbesserung der Schmierwirkung und Kaltfließeigenschaften von Mitteldestillaten.

## Claims

1. An oil-soluble copolymer having an OH number of from 10 to 350 and a molecular weight of from 500 to 100,000 g/mol, obtained from the reaction of a copolymer precursor which comprises structural units of.
A) from 5 to 95 mol-% of an olefinically unsaturated carboxylic acid or a derivative of such an acid,
B) from 5 to 95 mol-% of an olefinically unsaturated compound having at least one hydrocarbon radical containing at least 6 carbon atoms, and, if desired,
C) from 0 to 40 mol-% of further structural units selected from the group consisting of C₁-C₆-alkyl (meth)acrylates, C₁-C₆-alkyl vinyl esters and C₂-C₆-olefins,
with a reagent, which must carry at least one OH group and which, apart from this OH group, has at least one further functional group which is capable of reacting with the carboxylic acid or the derivative of a carboxylic acid as in component A), where the residual acid number is set to a value below 150 mg of KOH/g of copolymer by addition of the reagent.

2. A copolymer as claimed in claim 1, which has an OH number of from 20 to 300 mg of KOH/g.

3. A copolymer as claimed in claim 1 and/or 2, which has a mean molecular weight Mw of from 700 to 10,000 g/mol.

4. A copolymer as claimed in one or more of claims 1 to 3, where the proportion of the structural units (A) is from 10 to 60 mol-%.

5. A copolymer as claimed in one or more of claims 1 to 4, where the residual acid number is below 20, in particular below 10 mg of KOH/g.

6. A copolymer as claimed in one or more of claims 1 to 5, where the structural units A) are derived from maleic acid, acrylic acid, methacrylic acid, fumaric acid or itaconic acid, or derivatives thereof.

7. A copolymer as claimed in one or more of claims 1 to 6, in which the comonomers (B) are olefinically unsaturated compounds carrying linear, branched, cyclic and/or aromatic hydrocarbon radicals having at least 6 carbon atoms, preferably at least 8 carbon atoms, in particular at least 10 carbon atoms (excluding the olefinic group necessary for the polymerization).

8. A copolymer as claimed in one or more of claims 1 to 7, in which the comonomers C) are selected from the group consisting of ethylene, propene, butene, isobutene, pentene, hexene and 4-methylpentene.

9. A copolymer as claimed in one or more of claims 1 to 8, which has a melt viscosity at 140°C of from 10 to 5000 mPas.

10. A fuel oil composition comprising a relatively large amount of a middle distillate fuel oil having a sulfur content of below 0.5% by weight and a relatively small amount of a copolymer as claimed in claims 1 to 9.

11. The use of a copolymer as claimed in claims 1 to 9 for improving the lubricity and cold-flow properties of middle distillates.

## Revendications

1. Copolymères solubles dans l'huile présentant un indice OH de 10 à 350 et un poids moléculaire de 500 à 100.000 g/mole, obtenus par réaction d'un précurseur de copolymère, qui comprend des unités de structure
A) de 5 à 95 % molaires d'un acide carboxylique à insaturation oléfinique ou d'un dérivé d'un tel acide carboxylique,
B) de 5 à 95 % molaires d'un composé à insaturation oléfinique ayant au moins un reste hydrocarboné qui comprend 6 ou plus atomes de carbone, et éventuellement
C) de 0 à 40 % molaires d'autres unités de structure prises dans le groupe comprenant des (méth)-acrylates d'alkyle en C₁-C₆, des esters (alkyl en C₁-C₆)vinyliques et des oléfines en C₂-C₆,
sur un réactif qui doit porter au moins un groupe OH et outre ce groupe OH au moins un autre groupe fonctionnel, qui est capable de réagir sur un acide carboxylique ou le dérivé d'un acide carboxylique selon le composant A), l'indice d'acidité résiduelle étant ajusté par ajout du réactif à une valeur inférieure de 150 mg KOH/g de copolymère.

2. Copolymères selon la revendication 1, qui présentent un indice OH de 20 à 300 mg KOH/g.

3. Copolymères selon la revendication 1 et/ou 2, qui présentent un poids moléculaire moyen Mw de 700 à 10.000 g/mole.

4. Copolymères selon l'une des revendications 1 à 3, où le taux des unités de structure (A) est compris entre 10 et 60 % molaires.

5. Copolymères selon l'une des revendications 1 à 4, où l'indice d'acidité résiduelle est inférieur à 20, en particulier inférieur à 10 mg KOH/g.

6. Copolymères selon une ou plusieurs des revendications 1 à 5, où les unités de structure A dérivent de l'acide maléique, de l'acide acrylique, de l'acide méthacrylique, de l'acide fumarique ou de l'acide itaconique, ainsi que de leurs dérivés.

7. Copolymères selon une ou plusieurs des revendications 1 à 6, où les comonomères (B) sont des composés à insaturation oléfinique qui portent des restes hydrocarbonés linéaires, ramifiés, cycliques et/ou aromatiques présentant au moins 6 atomes de carbone, de préférence au moins 8 atomes de carbone, en particulier au moins 10 atomes de carbone (avec l'exception des groupes oléfiniques nécessaires pour la polymérisation).

8. Copolymères selon une ou plusieurs des revendications 1 à 7, où les comonomères C) sont pris dans le groupe comprenant l'éthylène, le propène, le butène, l'isobutène, le pentène, l'hexène ou le 4-méthyl-pentène.

9. Copolymères selon une ou plusieurs des revendications 1 à 8, qui présentent des viscosités à chaud à 140°C comprises entre 10 et 5000 mPas.

10. Composition d'huiles combustibles renfermant une quantité plus importante d'une huile combustible de distillats moyens ayant une teneur en soufre inférieure à 0,5 % en poids et une quantité plus faible d'un copolymère selon la revendication 1 à 9.

11. Utilisation d'un copolymère selon la revendication 1 à 9 pour l'amélioration de l'effet lubrifiant et des propriétés d'écoulement à froid de distillats moyens.
